# FASCICULE DE BREVET EUROPEEN

(11) **EP 0 584 017 B1**
(45) Date de publication et mention de la délivrance du brevet: **26.03.1997**
(21) Numéro de dépôt: 93402063.7
(22) Date de dépôt: 17.08.1993
(51) Int. Cl.: B29C 51/28, B29C 33/02, B29C 70/06, B29C 51/42, B29C 53/02, B29C 63/16

(54) **Presse pour le formage d'une pièce en matériau composite comportant des renforts fibreux dans une matrice en polymère**
Presse zum Formen eines Gegenstandes aus Verbundmaterial mit verstärkenden Fasern in einer Polimermatrix
Press for forming an object made of composite material with reinforcing fibres in a polymeric matrix

(30) Priorité: 20.08.1992 FR 9210156
(43) Date de publication de la demande: 23.02.1994
(73) Titulaire: GEC ALSTHOM ACB, 75116 PARIS (FR); AEROSPATIALE Société Nationale Industrielle, 75781 Paris Cédex 16 (FR)
(72) Inventeur: Blot, Philippe, F-44000 Nantes (FR); Augereau, Joel, F-44260 La Chapelle Launay (FR); Bretagne, Joel, F-44600 Saint Nazaire (FR); Dittberner, Jean-Jacques, F-44117 Saint Andre des Eaux (FR)
(74) Mandataire: Gosse, Michel

(56) Documents cités:
- EP-A- 0 483 849
- DE-A- 1 922 209
- FR-A- 2 235 781

## Description

La présente invention concerne un dispositif pour le formage d'une pièce en matériau composite comportant des renforts fibreux dans une matrice en polymère.

Ces matériaux, lorsqu'ils sont renforcés par des fibres longues telles que des fibres de verre ou de carbone, ne peuvent pas se déformer par allongement comme les matériaux métalliques. En effet, les fibres longues interdisent les allongements.

La matrice est par exemple constituée par une résine thermoplastique de type connu, telle que l'une de celles appelées PEI, PEEK, PES ou PPS. Avec des matrices de ce type, et à une température supérieure à la température de ramolissement de la matrice, celle-ci est déformable sous l'effet d'un effort appliqué et les renforts, disposés en couches dans la matrice, peuvent avoir des déplacements différentiels.

Pour qu'une plaque conserve ses caractéristiques mécaniques après déformation qui peut générer des défauts internes, il est nécessaire que le formage s'effectue sous une pression assurant une bonne compacité et à température suffisamment élevée.

Le document EP 0 483 849 décrit un procédé de moulage dans lequel un tube est extrudé à chaud entre un moule ouvert en deux parties. Le moule est ensuite fermé et de l'air est insufflé dans le moule pour lui faire prendre la forme du moule. Par ailleurs, le moule comporte des moyens de chauffage et de refroidissement rapide de façon à permettre l'adhésion contre la surface de la pièce formée d'un matériau d'amélioration de surface. Le chauffage doit être rapide car il est à une température plus élevée que celle nécessaire pour effectuer le formage de la pièce.

Le document DE 3727926 décrit par ailleurs un procédé pour former une pièce à partir de plaques en matériau thermoplastique renforcé de fibres. Dans le procédé décrit, on déforme à chaud la plaque à former en utilisant une matrice de formage. La déformation est effectuée par l'intermédiaire d'une membrane de séparation contre laquelle on applique une pression suffisante pour la déformer. La membrane de séparation est une feuille en aluminium, en matière synthétique ou en caoutchouc.

Si on utilise une feuille en aluminium, elle n'est utilisable qu'une seule fois, il est donc tout à fait souhaitable d'utiliser une membrane élastique en élastomère.

L'enseignement du document ci-dessus est insuffisant pour réaliser un dispositif industriel permettant de produire des pièces à une cadence rapide.

Le premier problème qui se pose est celui de chauffer rapidement et de refroidir rapidement la pièce après formage. En effet, l'inertie thermique de l'outillage de formage tel que décrit dans le document DE-A-3 727 926 allonge considérablement le temps de chauffage et, surtout, de refroidissement.

Un deuxième problème se pose lorsque la température de formage imposée par la matrice polymère est élevée, par exemple située entre 300°C et 400°C. En effet, il n'existe pas à l'heure actuelle de matériau permettant de réaliser une membrane réutilisable capable de s'allonger de 500 % à une telle température en atmosphère normale.

Compte tenu du prix très élevé des membranes en élastomère, le procédé de formage décrit dans le document DE-A3 727 926 est alors fortement pénalisé. De plus, la nécessité de remplacer la membrane après chaque opération de formage diminue sensiblement la cadence de fabrication.

L'invention a donc pour but une presse de formage permettant de produire des pièces en matériau composite à matrice en polymère à une cadence sensiblement plus rapide que les presses de formage existantes, quelles que soient la température de formage et la forme de la pièce à former et de permettre d'utiliser plusieurs fois la membrane.

L'invention a ainsi pour objet une presse pour le formage d'une pièce en matériau composite, comportant des renforts fibreux noyés dans une matrice en polymère, entre une membrane élastique et une forme complémentaire de la pièce à former, comprenant un plateau inférieur portant ladite forme, un plateau supérieur, des moyens de serrage aptes à appliquer un effort de serrage entre les plateaux, des moyens d'introduction d'un fluide sous pression entre le plateau supérieur et la membrane, et des moyens de chauffage et de refroidissement de la pièce à former, caractérisée en ce que les moyens de chauffage et de refroidissement sont totalement intégrés dans ladite forme, cette dernière étant montée sur le plateau inférieur par l'intermédiaire d'un moyen d'isolation thermique, le plateau supérieur portant la membrane élastique et en ce que des moyens sont prévus pour asservir les moyens de serrage aux moyens d'introduction de fluide sous pression, afin que la force exercée entre les plateaux par les moyens de serrage excède en permanence la force exercée sur la membrane par les moyens d'introduction de fluide sous pression d'une valeur comprise entre deux seuils admissibles.

En intégrant totalement les moyens de chauffage et de refroidissement à la forme et en isolant thermiquement cette dernière du plateau qui la supporte, on réduit considérablement l'inerte thermique de l'outillage, ce qui permet d'accroître de façon très sensible la cadence de fabrication. L'accroîssement de la cadence est aussi facilité par le montage de la membrane sur le plateau supérieur. Cette diminution d'inertie thermique contribue en même temps à protéger la membrane de la chaleur et l'asservissement des moyens de serrage permet d'éviter que la force d'écrasement supportée par le pourtour de la membrane élastique ne risque de l'endommager prématurément.

Avantageusement, le plateau supérieur de la presse porte également, en dessous de la membrane, un organe intermédiaire assurant la protection thermique de la membrane et'ou évitant le déchirement des fibres par coincement des fibres entre la membrane et la forme lorsque la pièce à former présente au moins une partie concave. A cet effet, cet organe intermédiaire est réalisé en un matériau thermiquement isolant et/ou présente une forme complémentaire de celle de la forme montée sur le plateau inférieur.

Selon un mode de réalisation préféré de l'invention, le pourtour de la membrane élastique est pris en sandwich entre un couvercle monté sous le plateau supérieur et un cadre inférieur, lié au couvercle par des moyens de liaison à démontage rapide. Pour faciliter le montage de la membrane, son pourtour est alors monté, de préférence, sur un cadre intermédiaire rigide.

Dans ce même mode de réalisation, les moyens de chauffage et de refroidissement comprennent des moyens pour faire circuler à tour de rôle un fluide de chauffage et un fluide de refroidissement dans des canaux internes à ladite forme.

Afin d'assurer un chauffage homogène de la pièce à former, notamment lorsque celle-ci ne repose pas sur la forme dans une fraction importante de sa surface, on peut prévoir d'équiper la presse de moyens de chauffage d'appoint, escamotables, aptes à être placés juste au-dessus de la pièce à former lorsque le plateau supérieur portant la membrane est éloigné de la forme.

On va maintenant donner la description d'un exemple de mise en oeuvre de l'invention en se référant aux dessins annexés dans lesquels :
- la figure 1 représente schématiquement une presse selon l'invention;
Les figures 2 et 3 représentent schématiquement et à échelle agrandie, respectivement en position ouverte et fermée les parties actives de la presse.
Les figures 4 et 5 représentent une variante des figures 2 et 3 dans lesquels on utilise une contre-forme.
En se référant à la figure 1, on voit une presse composée d'un bâti 1 supportant un plateau inférieur fixe 2. Le bâti 1 supporte également un plateau supérieur 3, mobile verticalement par le moyen d'un vérin 4.

Le plateau inférieur 2 porte une forme 5 correspondant au profil que l'on veut obtenir pour le matériau 6 à former, lequel est placé sur cette forme 5. Comme il a été dit plus haut, le matériau 6 est un matériau composite comportant des renforts fibreux dans une matrice en polymère. Dans le cas d'une matrice thermoplastique, le matériau se présente sous la forme d'une plaque rigide ou de feuilles plus ou moins souples et dans le cas d'une matrice thermodurcissable, il se présente sous la forme de couches souples de fibres pré-imprégnées.

La forme 5, en aluminium, correspondant au profil à obtenir, peut être convexe et former en quelque sorte un poinçon comme c'est le cas représenté sur la figure mais elle peut aussi être concave et former en quelque sorte une matrice.

Cette forme 5 est isolée thermiquement du plateau fixe 2 par un moyen d'isolation thermique 7. Cette isolation peut-être effectuée par une couche continue d'un matériau isolant ou par un matériau ne supportant la forme 5 que par de faibles surfaces de contact ou même par des points.

La forme 5 comporte des canaux tels que 8 pour la circulation d'un fluide d'échange thermique. Ces canaux 8 sont reliés à des canalisations extérieures d'alimentation 9 et d'évacuation 10 qui traversent un passage 11 effectué dans le plateau inférieur 2.

La canalisation d'alimentation 9 est pourvue d'une vanne à trois voies 12 permettant alternativement l'alimentation en fluide chaud 13 pour amener le matériau à former 6 à la température de formage, par exemple entre 300 et 400°C, puis en fluide de refroidissement 14 pour la solidification de la matrice thermoplastique une fois le formage effectué.

Le fluide de refroidissement est par exemple à 80°C. Ce système permet d'assurer une cadence rapide de formage des pièces en assurant très rapidement, le chauffage et le refroidissement du matériau 6 par l'intermédiaire de la forme 5. L'isolation 7 évite la transmission des calories au plateau inférieur 2 ce qui augmenterait l'inertie thermique et ne permettrait pas une grande cadence de fabrication.

Seule la forme 5 est rapidement chauffée et refroidie, ce qui évite d'endommager la membrane. On utilise avantageusement de l'huile comme fluide caloporteur.

Le plateau supérieur 3 de la presse porte un ensemble 15 qui comprend une membrane élastique 16 en élastomère dont le pourtour est pris en sandwich entre un cadre inférieur 17 et un couvercle 18. Une chambre 22 formée entre le couvercle 18 et la membrane 16 est reliée à une source de fluide sous pression par une conduite 19. Le pourtour de la membrane 16 est préalablement fixé sur un cadre intermédiaire rigide et amovible 20.

Les trois parties: couvercle 18, cadre intermédiaire 20 avec sa membrane 16 et cadre inférieur 17 sont assemblés par des moyens quelconques, tels que des étriers 21, qui n'ont aucune fonction de serrage et d'étanchéité entre la membrane et le couvercle 18 mais qui assurent au contraire un léger jeu entre ces trois pièces. L'étanchéité entre la membrane 16 et le couvercle 18 est assurée par la force d'appui du couvercle 18 sur le pourtour de la membrane 16 qui résulte d'une part de l'effort exercé vers le bas par le vérin 4 lorsque le plateau supérieur 3 est en appui contre le plateau inférieur 2 par l'intermédiaire du cadre 17 et d'autre part de l'effort en sens inverse s'exerçant vers le haut sur le couvercle 18 dû à la pression du fluide de formage dans la chambre 22. Ceci permet d'assurer une pression d'écrasement constante, ou en tout cas contrôlée entre deux seuils admissibles, du pourtour de la membrane 16 en asservissant la force du vérin 4 à la pression du fluide de formage dans la chambre 22.

En effet, la pression dans la chambre 22 peut atteindre 30 kg/cm² et si l'on appliquait la membrane contre le couvercle 18 avec un effort initial supérieur à l'effort dû à cette pression, alors que la chambre 22 n'est pas encore sous pression, cela aboutirait à la destruction du pourtour de la membrane 16 par écrasement.

Le dispositif permet ainsi de dissocier la fonction étanchéité, parfaitement contrôlable, de la fonction formage assurée par la pression dans la chambre 22.

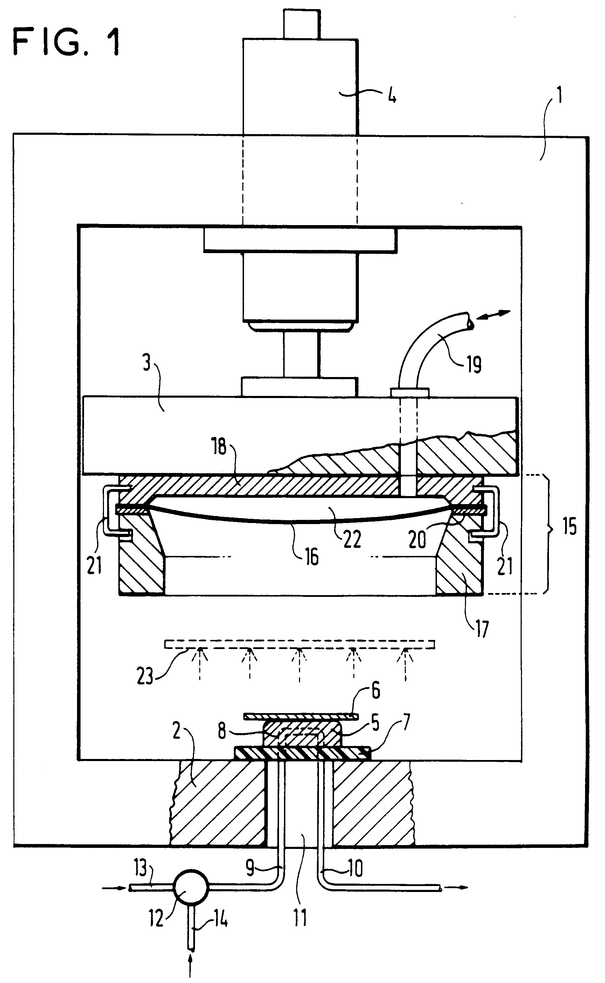

Comme il a été dit plus haut, il peut être nécessaire d'adjoindre aux moyens de chauffage intégrés dans la forme 5 des moyens de chauffage d'appoint, escamotables, afin de réaliser un chauffage homogène de la pièce lorsqu'elle ne repose que très partiellement sur la forme 5. On prévoit alors, comme l'illustre la figure 1, un panneau radiant 23 qui peut se déplacer latéralement par coulissement, pour venir se placer provisoirement juste au dessus du matériau à former 6, lorsque la presse est ouverte.

Une fois la température de formage atteinte par le moyen de la circulation du fluide chaud 13 et éventuellement associée à un chauffage annexe par panneau radiant 23, on ferme la presse et on envoie la pression dans la chambre 22.

La membrane 16 se déforme alors et vient appliquer parfaitement le matériau 6 contre la forme 5.

Le fluide utilisé pour la pression de formage est par exemple de l'air ou de l'azote. On pourrait également utiliser un fluide liquide.

Une fois que le matériau est parfaitement formé, on maintien la pression dans la chambre 22 et on assure, dans le cas d'une matrice thermoplastique, la consolidation du matériau 6 en le refroidissant au-dessous de sa température de ramollissement, en envoyant en 14 un fluide de refroidissement par exemple à 80°C.

On réduit ensuite la pression dans la chambre 22 et on ouvre la presse afin de démouler la pièce obtenue.

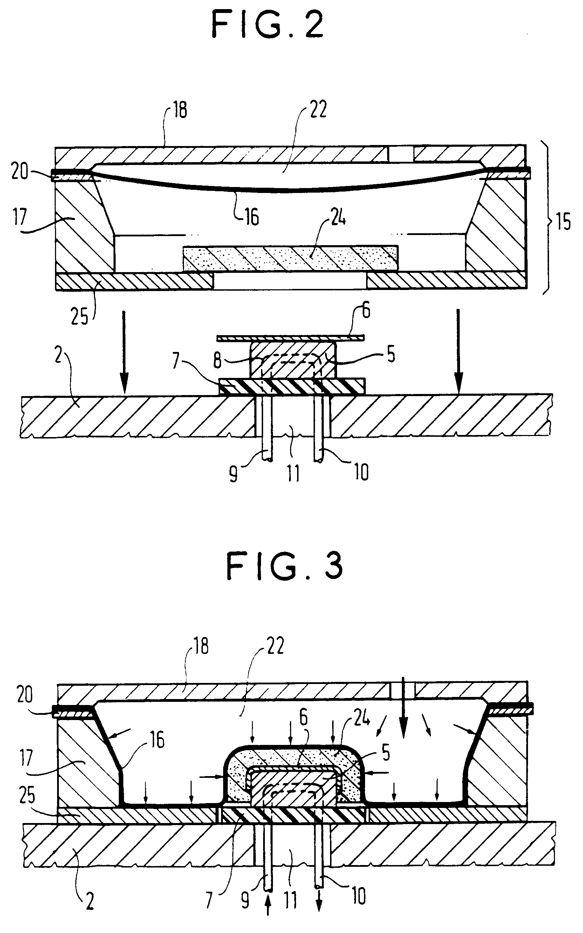

Les figures 2 et 3 représentent en position ouverte et fermée une partie seulement de la presse, disons les parties actives comportant l'ensemble 15 et le plateau inférieur 2 avec l'isolant 7, la forme 5 et le matériau à former 6.

Ces deux figures, ont pour but de montrer l'utilisation d'un écran thermique 24 permettant de limiter l'échauffement de la membrane 16 et donc de la réutiliser de nombreuses fois, lorsque la température de formage imposée pour la matrice polymère en matériau à former est élevée, par exemple comprise entre 300°C et 400°C. Cet écran thermique 24 est constitué par une plaque en silicone d'au moins 2 mm d'épaisseur et dont le pourtour est libre. Il est supporté par l'ensemble 15 sous la membrane 16 au moyen d'une structure 25 liée au cadre 17.

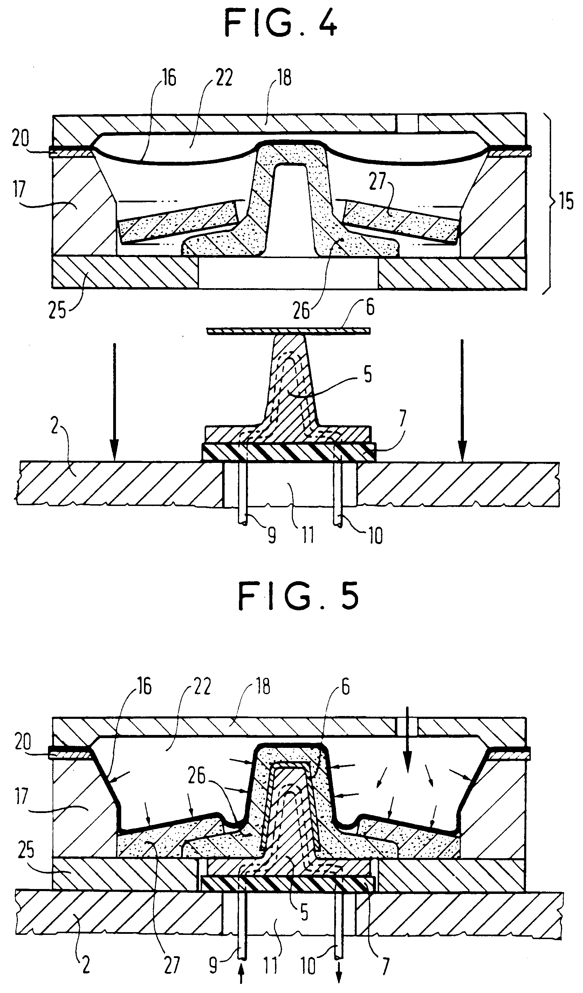

Les figures 4 et 5 sont semblables aux figures 2 et 3 et ont pour but de montrer l'utilisation d'une contre-forme 26 en élastomère, complémentaire de la forme 5 et placée en intermédiaire entre la membrane 16 et le matériau 6 à former. Cette solution est adoptée lorsque la forme de la pièce à exécuter est compliquée, ou lorsque la forme a un profil concave. Cette contre-forme ne nuit pas à la pression isostatique exercée contre le matériau 6, compte tenu de la forte pression exercée dans la chambre 22, de l'ordre de 10 kg/cm² et pouvant aller jusqu'à 30 kg/cm², et du fait que la contre-forme est en élastomère. Cette contre-forme joue également un rôle d'écran thermique vis-à-vis de la membrane 16 si cela est nécessaire.

L'écran thermique 24, et la contre-forme 26 si elle doit jouer le rôle d'écran thermique doivent résister de façon durable à la température de formage, donc à environ 350°C pour des matrices thermoplastiques.

Des matériaux présentant ces caractéristiques sont par exemple fabriqués par la société française SAFIC-ALCAN. Dans les figures 4 et 5, outre la contre-forme 26, il a été mis une cale de remplissage 27 en élastomère également.

Bien entendu, la presse telle que décrite pourrait fonctionner également avec un plateau supérieur fixe et un plateau inférieur mobile.

## Revendications

1. Presse pour le formage d'une pièce en matériau composite (6), comportant des renforts fibreux noyés dans une matrice en polymère, entre une membrane élastique (16) et une forme (5) complémentaire de la pièce à former, comprenant un plateau inférieur (2) portant ladite forme, un plateau supérieur (3), des moyens de serrage (4) aptes à appliquer un effort de serrage entre les plateaux (2, 3), des moyens d'introduction (19) d'un fluide sous pression entre le plateau supérieur (3) et la membrane (16), et des moyens (8) de chauffage et de refroidissement de la pièce à former, caractérisée en ce que les moyens (8) de chauffage et de refroidissement sont totalement intégrés dans ladite forme (5), cette dernière étant montée sur le plateau inférieur (2) par l'intermédiaire d'un moyen d'isolation thermique (7), le plateau supérieur (3) portant la membrane élastique (16) et en ce que des moyens sont prévus pour asservir les moyens de serrage (4) aux moyens d'introduction (19) de fluide sous pression, afin que la force exercée entre les plateaux (2, 3) par les moyens de serrage excède en permanence la force exercée sur la membrane (16) par le moyens d'introduction de fluide sous pression d'une valeur comprise entre deux seuls admissibles.

2. Presse selon la revendication 1, caractérisée par le fait que le pourtour de la membrane élastique (16) est pris en sandwich entre un couvercle (18) monté sous le plateau supérieur (3) et un cadre inférieur (17), lié au couvercle (18) par des moyens de liaison (21) à démontage rapide.

3. Presse selon la revendication 2, caractérisée par le fait que le pourtour de la membrane élastique (16) est fixé sur un cadre intermédiaire rigide et amovible (20).

4. Presse selon l'une quelconque des revendications précédentes, caractérisée par le fait que les moyens de chauffage et de refroidissement comprennent des moyens (12, 13, 14) pour faire circuler à tour de rôle un fluide de chauffage et un fluide de refroidissement dans des canaux (8) internes à ladite forme (5).

5. Presse selon l'une quelconque des revendications précédentes, caractérisée par le fait qu'elle comprend de plus des moyens de chauffage d'appoint (23), escamotables, aptes à être placés juste au-dessus d'une pièce à former reposant sur la forme (5) lorsque le plateau supérieur (3) portant la membrane (16) est éloigné de la forme (5).

6. Presse selon l'une quelconque des revendications précédentes, caractérisée par le fait que le plateau supérieur (3) porte également, en dessous de la membrane (16), un organe intermédiaire déformable (24, 26).

7. Presse selon la revendication 6, caractérisée par le fait que ledit organe intermédiaire (24, 26) est réalisé en un matériau thermiquement isolant.

8. Presse selon l'une quelconque des revendications 6 et 7, caractérisée par le fait que ledit organe intermédiaire (26) est complémentaire de ladite forme (5).

## Claims

1. A press for forming an article of composite material (6), comprising reinforcing fibers embedded in a polymer matrix, forming taking place between a resilient membrane (16) and a former (5) of complementary shape to the article to be formed, the press comprising a lower platen (2) carrying said former, an upper platen (3), clamping means (4) for applying a clamping force between the platens (2, 3), means (19) for introducing fluid under pressure between the upper platen (3) and the membrane (16), and means (8) for heating and cooling the article to be formed, the press being characterized in that the means (8) for heating and cooling are completely integral with said former (5), the former being mounted on the lower platen (2) via a thermal insulation means (7), the upper platen (3) carrying the resilient membrane (16), and in that servo-control means are provided responsive to the means (19) for introducing fluid under pressure to control the clamping means (4) so that the force exerted between the platens (2, 3) by the clamping means always exceeds the force exerted on the membrane (16) by the fluid introduction means, by an amount lying between two acceptable thresholds.

2. A press according to claim 1, characterized in that the periphery of the resilient membrane (16) is sandwiched between a cover (18) mounted on the upper platen (3) and a lower frame (17) connected to the cover (18) by securing means (21) which allow rapid dismounting.

3. A press according to claim 2, characterized in that the periphery of the resilient membrane (16) is secured to an intermediate rigid and removable frame (20).

4. A press according to any preceding claim, characterized in that the means for heating and cooling comprise means (12, 13, 14) for circulating in turn both a heating fluid and a cooling fluid through channels (8) internal to said former (5).

5. A press according to any preceding claim, characterized in that it also includes retractable auxiliary heating means (23) which are suitable for placing just above an article to be formed lying on the former (5) when the upper platen (3) carrying the membrane (16) is at a distance from the former (5).

6. A press according to any preceding claim, characterized in that the upper platen (3) also carries, underneath the membrane (16), an intermediate deformable member (24, 26).

7. A press according to claim 6, characterized in that said intermediate member (24, 26) is made of a thermally insulating material.

8. A press according to either of claims 6 or 7, characterized in that said intermediate member (26) has a shape complementary to that of said former (5).

## Patentansprüche

1. Presse für die Formung eines Bauteils aus Verbundmaterial (6), das Verstärkungsfasern in eine Polymermatrix eingebettet enthält, wobei die Formung zwischen einer elastischen Membran (16) und einer Form (5) erfolgt, deren Form zu der des zu formenden Bauteils komplementär ist und wobei die Presse eine untere, die Form tragende Platte (2), eine obere Platte (3), Kraftmittel (4), die eine Preßkraft zwischen den beiden Platten (2, 3) erzeugen kann, Mittel (19) zur Einspeisung eines Fluids unter Druck zwischen die obere Platte (3) und die Membran (16) und Mittel (8) zur Aufheizung und Abkühlung des zu formenden Bauteils besitzt, dadurch gekennzeichnet, daß die Mittel (8) zum Aufheizen und Abkühlen vollständig in die Form (5) integriert sind, die auf der unteren Platte (2) über ein Wärmeisolationsmittel (7) montiert ist, während die obere Platte (3) die elastische Membran (16) trägt, und daß Mittel vorgesehen sind, um die Kraftmittel (4) an die Mittel (19) zur Einspeisung eines Fluids unter Druck anzupassen, so daß die zwischen den Platten (2, 3) von den Kraftmitteln erzeugte Kraft permanent die Kraft, die auf die Membran (16) von den Mitteln zur Einspeisung eines Fluids unter Druck ausgeübt wird, um einen Wert übersteigt, der zwischen zwei zugelassenen Grenzen liegt.

2. Presse nach Anspruch 1, dadurch gekennzeichnet, daß der Umfang der elastischen Membran (16) zwischen einem Deckel (18), der unter der oberen Platte (3) montiert ist, und einem unteren Rahmen (17) eingespannt ist, der mit dem Deckel (18) über schnell demontierbare Verbindungsmittel (21) verbunden ist.

3. Presse nach Anspruch 2, dadurch gekennzeichnet, daß der Umfang der elastischen Membran (16) an einem starren und abnehmbaren Zwischenrahmen (20) befestigt ist.

4. Presse nach einem beliebigen der vorhergehenden Ansprüche, dadurch gekennzeichnet, daß die Mittel zum Heizen und Kühlen Mittel (12, 13, 14) enthalten, um wahlweise ein Heizfluid und ein Kühlfluid in inneren Kanälen (8) der Form (5) fließen zu lassen.

5. Presse nach einem beliebigen der vorhergehenden Ansprüche, dadurch gekennzeichnet, daß sie außerdem entfernbare Zusatzheizmittel (23) aufweist, die direkt oberhalb eines auf der Form (5) ruhenden, zu formenden Bauteils angeordnet werden können, wenn die obere Platte (3) mit der Membran (16) von der Form (5) entfernt ist.

6. Presse nach einem beliebigen der vorhergehenden Ansprüche, dadurch gekennzeichnet, daß die obere Platte (3) weiter unter der Membran (16) ein verformbares Zwischenorgan (24, 26) enthält.

7. Presse nach Anspruch 6, dadurch gekennzeichnet, daß das Zwischenorgan (24, 26) aus einem wärmeisolierenden Material besteht.

8. Presse nach einem beliebigen der Ansprüche 6 und 7, dadurch gekennzeichnet, daß das Zwischenorgan (26) eine Form besitzt, die zu der Form (5) komplementär ist.
